# EUROPEAN PATENT APPLICATION

(11) **EP 1 518 632 A2**
(43) Date of publication of application: **30.03.2005**
(21) Application number: 04022857.9
(22) Date of filing: 24.09.2004
(51) Int. Cl.: B23K 20/12

(54) **Method of manufacturing a rotary shaft**

(30) Priority: 26.09.2003 JP 2003335147
(71) Applicant: Hoshizaki Denki Kabushiki Kaisha, Toyoake-shi, Aichi-ken (JP)
(72) Inventor: Mizutani, Yasuki c/o HOSHIZAKI DENKI KABUSHIKI, Toyoake-shi, Aichi-ken (JP); Sugie, Hiroyuki HOSHIZAKI DENKI KABUSHIKI KAISHA, Toyoake-shi, Aichi-ken (JP)
(74) Representative: Kuhnen, Rainer Andreas, Dipl.-Ing.

(57) **Abstract**

Three solid round bars are prepared as auger members, respectively as a main body member, an upper shaft member, and a lower shaft member. End surfaces of the members are coaxially joined together by friction welding. Turning machining is then performed by using a lathe, forming a helical blade, a spline, and the like. In addition, burnishing is performed on a corner portion that includes an outer circumferential edge of a joining surface where friction welding is performed, and another corner portion that includes an outer circumferential edge of another joining surface where friction welding is performed. The burnishing is performed by pressing a roller, which is freely rotatable about a roller support shaft center of a Superoll, toward the corner portions of the rotating auger. Roller burnishing may also be performed two times on the same location, with a predetermined time interval therebetween.

## Description

### BACKGROUND OF THE INVENTION

### 1. Field of the Invention

The present invention relates to a method of manufacturing a rotary shaft that includes a rotary shaft main body, and a shaft portion that is bonded coaxially to the rotary shaft main body. In particular, the present invention relates to a method of manufacturing an auger of an auger type ice making machine.

### 2. Description of the Related Art

A rotary shaft manufactured frommetal and used in transferring torque, such as an auger in an auger ice making machine, is generally not limited to a hollow round bar or a hollow solid bar having a uniform diameter. In the case of an auger, for example, the size of the diameter differs between auger shaft portions at both ends and an auger main body portion having a helical blade. If the rotary shaft is to be formed by turning from one round bar having a uniform diameter as for such an auger, a large amount of turning becomes necessary to machine a shaft portion having a small diameter, as with the auger. In addition, the product yield with respect to the material used becomes considerably lower. Further, an excessive amount of machining time is required.

JP 8-35751 A discloses a method in which round bars that correspond to the diameters of both shaft portions and an auger main body portion, respectively, are prepared. The round bars are joined by mutual friction welding. According to this friction welding method, there is a reduction in excess material, material costs are lowered, and machining time becomes shorter. This leads to a reduction in the number of man-hours.

There is a problem, however, in that friction-welded joining portions have a lower strength compared to the parent material of the rotary shaft. Further, a problem arises in terms of the strength of the joining portions where different diameter round bars are joined, that is, when the diameters of members to be joined differ as with an auger, because the joining portions overlap with corner portions (fillet portions) where stress concentrations develop.

### SUMMARY OF THE INVENTION

The present invention has been made in order to solve the problems described above. An object of the present invention is to provide a method of manufacturing a rotary shaft in which the strength of joining portions where members are friction welded can be increased.

The method of manufacturing a rotary shaft according to the present invention relates to a method of manufacturing a rotary shaft that has a rotary shaft main body and a shaft portion joined coaxially to the rotary shaft main body, the method being characterized by including: joining together an end surface of the rotary shaft main body and an end surface of the shaft portion opposed to the end surface of the rotary shaft main body by friction welding; and performing roller burnishing on a joining location where the rotary shaft main body and the shaft portion are joined together by the friction welding.

### BRIEF DESCRIPTION OF THE DRAWINGS

In the accompanying drawings:
FIG. 1 is a schematic diagram that shows the structure of an auger type ice making machine that uses an auger which has been manufactured by a manufacturing method according to Embodiment 1 of the present invention;
FIG. 2 is a process diagram that explains processes of the auger manufacturing method of FIG. 1;
FIG. 3 is a side view that shows the structure of a Superoll that is used as a tool that performs roller burnishing;
FIG. 4 is a diagram as seen from arrow B of FIG.3; and
FIG. 5 is a process diagram that explains processes of an auger manufacturing method according to Embodiment 2 of the present invention.

### DETAILED DESCRIPTION OF THE PREFERRED EMBODIMENTS

Embodiments of the present invention are explained below based on the appended drawings.

### Embodiment 1

An auger of an auger type ice making machine, which is shown as an example of a rotary shaft according to the present invention, is explained in Embodiment 1.

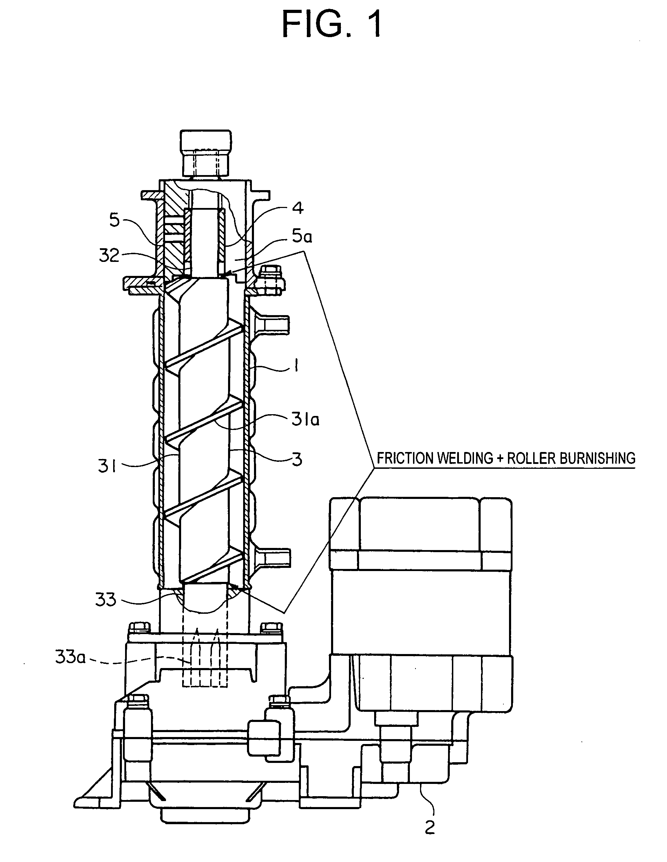

FIG. 1 shows the structure of an ice making mechanism portion of the auger type ice making machine.

An auger 3 that has a helical blade 31a arranged in a helical manner on an outer circumference thereof is disposed in an inner portion of a cylindrical cooling cylinder 1. The auger 3 is rotatably supported at upper and lower end portions thereof.

The auger 3 is composed of a main body portion 31 provided with the helical blade 31a, and an upper shaft portion 32 and a lower shaft portion 33 that each have an outer diameter that is smaller than that of the main body portion 31. The upper shaft portion 32 is supported by a bearing 4 so as to be freely rotatable. Further, the lower shaft portion 33 is also freely rotatably supported, and in addition, there is a spline 33a formed in an end portion of the lower shaft portion 33. A geared motor 2 that is provided with a speed reducer and a drive motor is joined to the lower shaft portion 33 through the spline 33a.

On the other hand, a fixed blade 5 having a compression passage 5a is provided to an upper portion of the cooling cylinder 1.

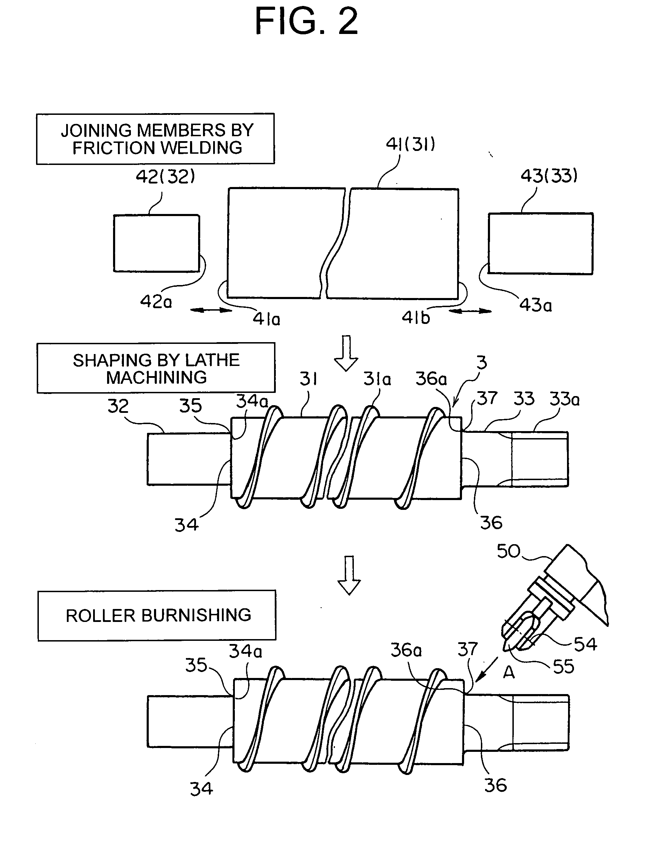

A method of manufacturing the auger 3 is explained next based on FIG. 2.

First, three solid round bars of stainless steel (SUS304) are prepared as a main body member 41, an upper shaft member 42, and a lower shaft member 43. The members form the main body portion 31, the upper shaft portion 32, and the lower shaft portion 33, respectively, of the completed auger 3.

The upper shaft member 42 and the lower shaft member 43 each use a material that has a smaller diameter than the diameter of the main body member 41.

One end surface 41a of the main body member 41 and an opposing end surface 42a of the upper shaft member 42 are coaxially joined by friction welding so that their centers coincide with each other. Specifically, the end surface 41a and the end surface 42a are brought into abutment with each other and a pressure is applied thereto. One of the members, for example the upper shaft member 42, is then rotated in this state, and joining surfaces are heated by utilizing frictional heat due to relative rotational motion. When the upper shaft member 42 and the main body member 41 reach a softened state, relative rotation is stopped, and an upset pressure is applied, thus pressure welding the two members together.

For example, with a relative rotational speed of 2000 rpm between the members to be friction welded, and a frictional pressure on the order of 120 MPa, the joining surfaces of both members are made to undergo friction and heated until a friction upset distance of 5.3 mm results. An upset pressure on the order of 180 MPa is then applied for an upset time of 10 seconds, thus pressure welding the two members together.

The main body member 41 and the upper shaft member 42 are joined in a stepped state because their diameters differ.

Similarly, the other end surface 41b of the main body member 41 and an opposing end surface 43a of the lower shaft member 43 are coaxially joined by friction welding.

After thus joining the three members together by friction welding, forming an integrated auger 3 member, turning is performed by using a lathe, thus forming the helical blade 31a, the spline 33a, and the like. The outer shape of the friction welded auger 3 is thus formed. An outer circumferential edge 34a of a friction welded joining surface 34, and an outer circumferential edge 36a of a joining surface 36 each appear in an outer circumferential surface of the auger 3 at this time.

Burnishing is performed next on a corner portion 35 that includes the outer circumferential edge 34a and a corner portion 37 that includes the outer circumferential edge 36a. That is, roller burnishing is performed at joining locations where joining is performed by friction welding.

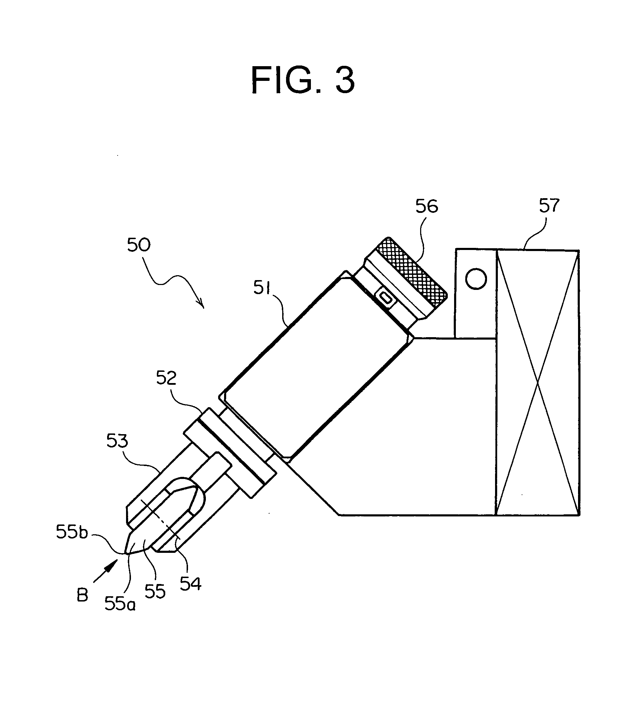

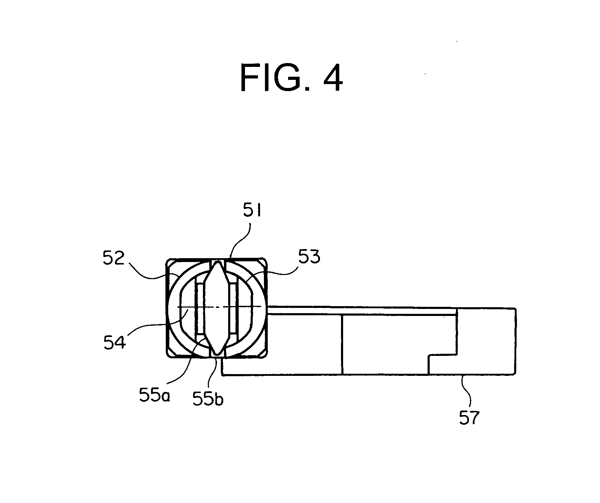

Specifically, burnishing is performed by pressing a Superoll 50 shown in FIG. 3 and FIG. 4 in arrow direction A toward the corner portions 35 and 37 of the rotating auger 3.

Referring to FIG. 3, the Superoll 50 has a roll holder 53 that is connected to a distal end of a body 51 through a head joint 52. A roller 55 that is freely rotatable about a roller support shaft center 54 that is perpendicular to the longitudinal direction of the body 51 is provided to the roller holder 53. The roller 55 is a disk whose outer circumferential portion 55a is pointed in a tapered shape. An outer circumferential end 55b of the distal end that is pointed in a tapered shape is formed having a corner rounding R1.

A pre-load adjustment knob 56 is provided at a rear end of the body 51 in order to adjust the load that is initially applied when pressing the roller 55 against a work piece. Further, a shank 57 is attached to the body 51. Positioning on the body 51 can thus be performed.

For example, the Superoll 50 is attached as an NC lathe tool, and the auger 3 is attached as a work piece. The auger 3 is rotated, and the outer circumferential end 55b of the roller 55 is first pressed against the corner portion 35. The roller 55 rotates about the roller support shaft center 54 while pressing on the surface of the corner portion 35. Pressure is applied to a surface of the corner portion 35 including locations where joining is performed by friction welding. The surface of the corner portion 35 plastically deforms, and is finished to a smooth surface.

Similar processes are also performed on the corner portion 37 using the Superoll 50.

It should be noted that the amount that the roller 55 is pressed (burnishing amount) when performing the roller burnishing is from 0.04 to 0.07 mm.

When the opposing end surfaces of the three members are thus joined by friction welding, compressive residual stress develops in the joining surfaces 34 and 36 due to the frictional pressure and the upset pressure during friction welding. A higher compressive residual force can be made to develop in locations that are deep within the auger 3, as compared to the residual force that develops when performing roller burnishing alone without friction welding, when roller burnishing is performed on the friction welding joining locations that appear on the surfaces of the corner portions 35 and 37 of the auger 3 after machining of the auger 3. The strength of the auger 3 can thus be increased.

Further, an increase in hardness can also be achieved for the surfaces on which roller burnishing is performed.

In addition, special machine tools are not necessary in order to perform this type of roller burnishing, and the setup time and the processing time are shortened. Accordingly, the auger 3 having a stable strength can be obtained at a relatively low cost.

Referring to FIG. 3 and FIG. 4, the Superoll 50 has a shape in which the outer circumferential end 55b of the roller 55 has a pointed configuration, and the periphery of the roller 55 is recessed with respect to a work piece contact portion of the roller 55. Roller burnishing can therefore be performed easily in the corner portions 35 and 37.

It should be noted that the strength of the joining portions can be increased by performing roller burnishing on the joining locations where joining is performed by friction welding. The joining locations at which roller burnishing is performed are not limited, however, to narrow locations like the corner portions 35 and 37. Further, rollerburnishingmayalsobeperformedonlocations where members having identical diameters are joined together by friction welding.

### Embodiment 2

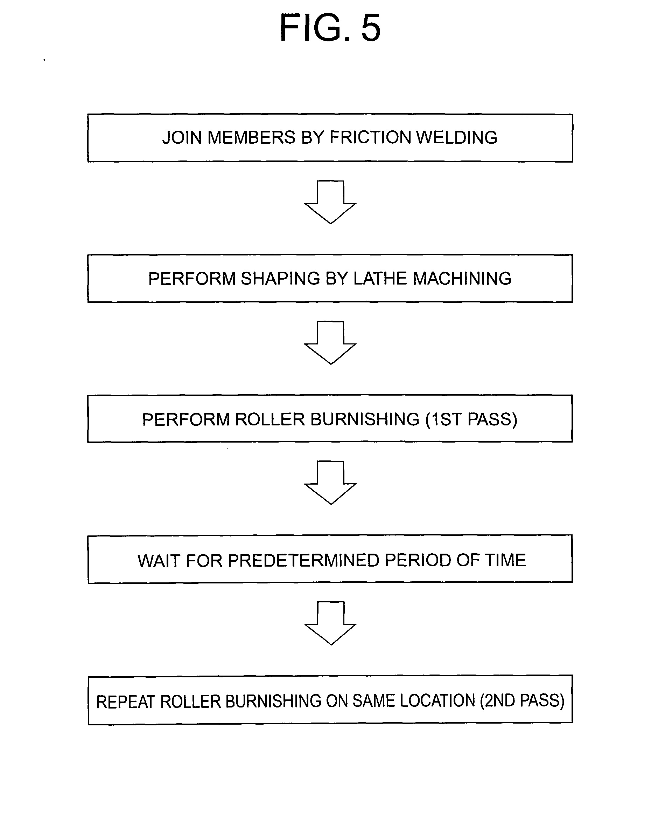

In Embodiment 1, roller burnishing is performed one time after joining the members by friction welding and performing shaping by lathe machining. In this embodiment, however, as shown in FIG. 5, roller burnishing is performed two times on the same location, with a predetermined interval of time therebetween.

It is preferable that the time interval be from 1 to 2 months.

Roller burnishing can increase fatigue strength if performed a plurality of times on the same location. However, when performed too many times, the effect of roller burnishing lessens. Further, if roller burnishing is performed a plurality of times in succession without allowing for a time interval, the fatigue strength increasing effect lessens. It has been found that the fatigue strength can be increased by performing roller burnishing two times on the same location, with a long period of time interval of 1 to 2 months therebetween.

It should be noted that, although roller burnishing is performed two times with a time interval therebetween in this embodiment, roller burnishing may also be performed three or more times, with time intervals therebetween, depending upon the type, the size, and the like of the material to be machined.

Examples of methods of manufacturing an auger of an auger type ice making machine are explained in Embodiments 1 and 2 as described above. However, in addition to manufacturing the auger of the auger type ice making machine, it is also possible to apply the method of manufacturing a rotary shaft according to the present invention to a wide variety of applications where it is required to increase a strength of a joining portion for a member made by joining a plurality of members through friction welding.

## Claims

1. A method of manufacturing a rotary shaft,
the rotary shaft having a rotary shaft main body and a shaft portion that is joined coaxially to the rotary shaft main body,
the method comprising:
joining together an end surface of the rotary shaft main body and an end surface of the shaft portion opposed to the end surface of the rotary shaft main body by friction welding; and
performing roller burnishing on a joining location where the rotary shaft main body and the shaft portion are joined together by the friction welding.

2. A method of manufacturing a rotary shaft according to claim 1, wherein the roller burnishing is performed a plurality of times, with time intervals therebetween.
